# FASCICULE DE BREVET EUROPEEN

(11) **EP 1 432 763 B1**
(45) Date de publication et mention de la délivrance du brevet: **16.05.2018**
(21) Numéro de dépôt: 02774932.4
(22) Date de dépôt: 30.09.2002
(51) Int. Cl.: C08L 71/02, C08L 77/00, B05D 1/14, D01F 6/90, C08G 81/00, C08G 69/40, D01F 6/60, D01F 6/82

(54) **MATERIAUX COMPOSITES COMPRENANT UN MATERIAU DE RENFORT ET COMME MATRICE THERMOPLASTIQUE UN POLYAMIDE ETOILE, ARTICLE COMPOSE PRECURSEUR DE CES MATERIAUX ET PRODUITS OBTENUS A PARTIR DE CES MATERIAUX**
VERBUNDELEMENTE MIT VERSTÄRKUNGSMATERIAL UND STERNFÖRMIGEM THERMOPLASTISCHEN POLYAMID
COMPOSITE MATERIALS COMPRISING A REINFORCING MATERIAL AND A STAR POLYAMIDE AS A THERMOPLASTIC MATRIX, THE PRECURSOR COMPOUND ARTICLE OF SAID MATERIALS AND THE PRODUCTS OBTAINED USING SAME

(30) Priorité: 01.10.2001 FR 0112617
(43) Date de publication de la demande: 30.06.2004
(73) Titulaire: Rhodia Opérations, 93306 Aubervilliers (FR)
(72) Inventeur: MYARD, Philippe, F-69660 Collonge Au Mont D'Or (FR); PHILIPPON, Frédéric, 69130 Ecully (FR)
(74) Mandataire: Benvenuti, Federica
(86) Numéro de dépôt international: PCT/FR2002/003326
(87) Numéro de publication internationale: WO 2003/029350

(56) Documents cités:
- EP-A1- 0 761 715
- EP-A2- 0 682 070
- WO-A1-00/47654
- WO-A1-97/24388
- WO-A1-97/45474
- WO-A1-99/64496
- US-A- 5 959 069

## Description

Le domaine de l'invention est celui des matériaux composites et de leurs procédés de fabrication.

De façon plus précise, l'invention se rapporte à l'utilisation de polyamide à structure étoile servant à l'imprégnation de matériaux de renfort, notamment sous la forme de fils et/ou de fibres, destinés à jouer le rôle de matrice thermoplastique, dans des matériaux composites.

Par fil, on entend un monofilament, un fil multifilamentaire continu, un filé de fibres, obtenu à partir d'un unique type de fibres ou de plusieurs types de fibres en mélange intime. Le fil continu peut être également obtenu par assemblage de plusieurs fils multifilamentaires.

Par fibre, on entend un filament ou un ensemble de filaments coupés, craqués ou convertis.

Dans le domaine des matériaux haute-performances, les composites ont pris une place prépondérante, de par leurs performances et les gains de poids qu'ils autorisent. Les composites hautes performances les plus connus à ce jour, sont obtenus à partir de résines thermodurcissables, dont l'utilisation est limitée aux applications de faibles séries, principalement dans l'aéronautique, le sport automobile, et dans les meilleurs cas, présentant des temps de fabrication voisins d'une quinzaine de minutes, comme par exemple, lors de la fabrication de skis. Le coût de ces matériaux, et/ou les temps de fabrication, les rendent incompatibles avec un usage en grande série.

Une réponse, en regard des temps de fabrication, est donnée par les composites à matrice thermoplastique. Les résines thermoplastiques sont en général connues pour leur viscosité élevée, ce qui constitue un frein en ce qui concerne l'imprégnation des matériaux de renfort, composés en général de faisceaux multifilamentaires très denses. Il résulte de l'emploi des matrices thermoplastiques disponibles sur le marché, notamment des matrices polyamide, une difficulté d'imprégnation nécessitant soit des temps d'imprégnation prolongés, soit des pressions de mise en oeuvre importantes. Dans la majeure partie des cas, les matériaux composites obtenus à partir de ces matrices peuvent présenter des microvides et des zones non imprégnées. Ces microvides causent des chutes de propriétés mécaniques, un vieillissement prématuré du matériau ainsi que des problèmes de délaminage lorsque le matériau se compose de plusieurs couches de renforts.

Pour améliorer l'imprégnation des fils de renfort par la matrice et l'adhésion entre les fils de renfort et la matrice, plusieurs voies ont été explorées.

La première de ces voies a consisté à utiliser des polyamides linéaires à poids moléculaire abaissé, comme matrice.

Ainsi, le document FR-2 158 422 décrit une feuille composite constituée d'une matrice polyamide et de fibres renfort de type fibres de verre. Le polyamide est obtenu par polycondensation d'ε-caprolactame, dont le poids moléculaire est compris entre 3000 et 25000, ayant la capacité, grâce à sa faible viscosité et donc sa faible tension superficielle, d'imprégner convenablement les fibres de renfort et ainsi de limiter l'apparition de microvides, dans le produit fini. Ce document décrit également un procédé de formage de cette feuille composite.

De façon générale, l'utilisation de polyamides de poids moléculaires faibles dans la matrice présente comme inconvénient majeur d'altérer les propriétés mécaniques du composite, notamment en ce qui concerne la résistance à la rupture, la résistance à l'allongement et le comportement en fatigue. En effet, lors de la mise en oeuvre de composites hautes performances, renforcés de fibres longues, les propriétés mécaniques de ces composites sont fonction de la plasticité de la matrice, qui transmet les contraintes au niveau du renfort, et des propriétés mécaniques de celle-ci.

Une autre voie permettant d'améliorer l'imprégnation des fibres de renforts par la matrice, consiste à employer une matrice se présentant sous la forme d'un oligomère ou d'un prépolymère de bas poids moléculaire, polymérisable par polycondensation, in situ.

Ainsi, le document FR-A-2 603 891 concerne un procédé de fabrication d'un matériau composite, constitué d'une matrice en polyamide renforcée par des fibres de renfort longues. Ces fibres sont imprégnées d'un prépolymère ou d'un oligomère de polyamide qui comporte à chaque extrémité de la chaîne moléculaire une fonction réactive susceptible de réagir avec une autre molécule d'oligomère ou de prépolymère sous l'effet d'un chauffage, entraînant l'allongement de la chaîne polymérique, pour obtenir un polyamide de poids moléculaire élevé. L'oligomère ou le prépolymère, de faible masse moléculaire, a comme caractéristique d'être fluide à l'état fondu. Les polyamides utilisés sont préférentiellement des polyamides 6, 6.6, 6.10, 6.12, 11 et 12. Les fibres imprégnées sont ensuite pultrudées à travers une filière conformatrice, à température élevée, afin de former des profilés.

Ce procédé reste voisin des procédés classiques de polymérisation, donc présente des temps de cycles incompatibles avec une cadence de production rapide. Si l'on adapte les temps de cycles de façon à les rendre compatibles avec la grande série, le poids moléculaire du polyamide obtenu et constituant la matrice est trop faible pour conférer à cette dernière un bon niveau de propriétés mécaniques.

Le document EP-B-0 133 825 décrit un matériau composite souple principalement constitué d'un matériau de renfort sous forme d'une mèche de fibres continues parallèles, imprégnées de poudre thermoplastique, préférentiellement de la poudre de polyamide, et d'une matrice thermoplastique sous forme de gaine autour de la mèche de fibres continues, cette gaine pouvant être également en polyamide. Ce matériau se caractérise par le fait que le polymère constituant la matrice thermoplastique possède un point de fusion inférieur ou égal à celui du polymère constituant la poudre thermoplastique, de telle sorte que le gainage des fibres recouvertes de poudre est réalisé par fusion de la matrice thermoplastique, mais sans fusion de la poudre, de telle sorte que cette dernière isole les fibres de la gaine.

Un inconvénient de l'utilisation d'un polymère thermoplastique sous forme de poudre est la nécessité d'utiliser un appareillage complexe qui limite la quantité de composite obtenue. Il apparaît donc clairement que ce procédé est peu compatible avec une production de grande série.

Le document US-B-5 464 684 décrit un fil hybride comprenant un coeur de mélange intime de filaments de renfort et de filaments de polyamides de basse viscosité, formant la matrice. Ce noyau est recouvert par un fil continu de polyamide, préférentiellement du même type que celui utilisé pour le noyau. Le polyamide utilisé est du type nylon 6 ou nylon 6.6, mais peut également être constitué par le nylon 6.6 T, le nylon 6.10, le nylon 10 ou un polyamide d'acide adipique et de 1,3-xylylènediamine. Les fibres de renfort sont des fibres de carbone ou des fibres de verre.

La technique utilisée pour fabriquer un tel fil hybride est certes adaptée à des applications de petites séries, telles que la fabrication de raquettes de tennis. Toutefois, il est difficile de concevoir l'utilisation d'une telle méthode à plus grande échelle.

Le document WO 99/64496 décrit pour sa part des polyamides de haute fluidité.

L'analyse de l'état de la technique montre que l'amélioration des performances de matériaux composites, centrée sur l'amélioration de l'imprégnation de la matrice dans le matériau de renfort, ne répond pas aux exigences soit de propriétés mécaniques, soit de temps de mise en oeuvre des applications de grandes séries visées par les matériaux composites thermoplastiques.

L'objectif de la présente invention est donc de remédier à ces inconvénients en proposant un article précurseur d'un matériau composite, comprenant des types différents de fils et/ou de fibres, et notamment au moins un fil et/ou des fibres de renfort, et au moins un fil et/ou des fibres générateur d'une matrice thermoplastique présentant une haute fluidité à l'état fondu, permettant une très bonne imprégnation du fils et/ou des fibres de renfort, lors de la formation du matériau composite. Un tel article permet d'obtenir un matériau composite par une technique simple et rapide de thermoformage.

Un autre objectif de l'invention est de proposer un matériau composite, obtenu à partir de cet article et présentant de bonnes propriétés mécaniques.

Enfin, un dernier objectif de l'invention est de fournir un matériau composite présentant un avantage de réduction de coûts de fabrication, par l'emploi d'un outillage mettant en oeuvre des basses pressions et des temps de cycles raccourcis.

A cette fin, l'invention concerne un article précurseur d'un matériau composite selon la revendication 1.

Le polymère à structure étoile est un polymère comprenant des chaînes macromoléculaires étoiles, et le cas échéant des chaînes macromoléculaires linéaires. Les polymères comprenant de telles chaînes macromoléculaires étoiles sont par exemple décrits dans les documents FR 2 743 077, FR 2 779 730, EP 0 682 057 et EP 0 832 149. Ces composés sont connus pour présenter une fluidité améliorée par rapport à des polyamides linéaires.

Les chaînes macromoléculaires étoiles comportent un coeur et au moins trois branches de polyamide. Les branches sont liées au coeur par une liaison covalente, par l'intermédiaire d'un groupement amide ou d'un groupement d'une autre nature. Le coeur est un composé chimique organique ou organométallique, de préférence un composé hydrocarboné comportant éventuellement des hétéroatomes et auquel sont reliées les branches. Les branches sont des chaînes polyamides. Les chaînes polyamides constituant les branches sont de préférence du type de celles obtenues par polymérisation des lactames ou aminoacides, par exemple de type polyamide 6.

Le polyamide à structure étoile selon l'invention comprend éventuellement, outre les chaînes étoiles, des chaînes polyamide linéaires. Dans ce cas, le rapport en poids entre la quantité de chaînes étoiles et la somme des quantités de chaînes étoiles et de chaînes linéaires est compris entre 0,1 et 1 bornes incluses. Il est de préférence compris entre 0,5 et 1.

Selon un mode de réalisation préférentiel de l'invention, le polyamide à structure étoile, c'est-à-dire comprenant des chaînes macromoléculaires étoiles, est obtenu par copolymérisation d'un mélange de monomères comprenant au moins :
a) des monomères de formule générale (I) suivante : 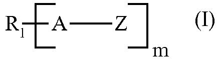
b) des monomères de formules générales (IIa) et (IIb) suivantes :

   Z-R₃-Z (III)

   dans lesquelles :
   - R1 est un radical hydrocarboné comprenant au moins 2 atomes de carbone, linéaire ou cyclique, aromatique ou aliphatique et pouvant comprendre des hétéroatomes,
   - A est une liaison covalente ou un radical hydrocarboné aliphatique pouvant comprendre des hétéroatomes et comprenant de 1 à 20 atomes de carbone,
   - Z représente une fonction amine primaire ou une fonction acide carboxylique,
   - Y est une fonction amine primaire quand X représente une fonction acide carboxylique
      ou
   - Y est une fonction acide carboxylique quand X représente une fonction amine primaire,
   - R2, R3 identiques ou différents représentent des radicaux hydrocarbonés aliphatiques, cycloaliphatiques ou aromatiques substitués ou non comprenant de 2 à 20 atomes de carbone et pouvant comprendre des hétéroatomes,
   - m représente un nombre entier compris entre 3 et 8.

Par acide carboxylique, on entend les acides carboxyliques et leurs dérivés, tels que les anhydrides d'acide, les chlorures d'acide, les esters, etc.

Des procédés d'obtention de ces polyamides étoiles sont décrits dans les documents FR 2.743.077 et FR 2.779.730. Ces procédés conduisent à la formation de chaînes macromoléculaires étoiles, en mélange avec éventuellement des chaînes macromoléculaires linéaires.

Si on utilise un comonomère de formule (III), la réaction de polymérisation (polycondensation) est avantageusement effectuée jusqu'à l'atteinte de l'équilibre thermodynamique.

Le monomère de formule (I) peut également être mélangé à un polymère en fondu, au cours d'une opération d'extrusion.

Ainsi, selon un autre mode de réalisation de l'invention, le polyamide à structure étoile est obtenu par mélange en fondu, par exemple à l'aide d'un dispositif d'extrusion, d'un polyamide du type de ceux obtenus par polymérisation des lactames et/ou des aminoacides et d'un monomère de formule (I).

De tels procédés d'obtention sont décrits dans les brevets EP 0 682 070 et EP 0 672 703.

Selon une caractéristique particulière de l'invention, le radical R₁ est soit un radical cycloaliphatique tel que le radical tétravalent de cyclohexanonyle, soit un radical 1,1,1-triyle-propane, 1,2,3-triyle-propane.

Comme autre radicaux R₁ convenables pour l'invention on peut citer à titre d'exemple, les radicaux trivalents de phényle et cyclohexanyle substitués ou non, les radicaux tétravalents de diaminopolyméthylène avec un nombre de groupes méthylène compris avantageusement entre 2 et 12 tels que le radical provenant de l'EDTA (acide éthylène diamino tétracétique), les radicaux octovalents de cyclohexanonyle ou cyclohexadinonyle, et les radicaux provenant de composés issus de la réaction des polyols tels que glycol, pentaérythritol, sorbitol ou mannitol avec l'acrylonitrile.

Avantageusement, au moins deux radicaux R₂ différents peuvent être employés dans les monomères de formule (II).

Le radical A est, de préférence, un radical méthylénique ou polyméthylénique tel que les radicaux éthyle, propyle ou butyle ou un radical polyoxyalkylènique tel que le radical polyoxyéthylènique.

Selon un mode de réalisation particulier de l'invention, le nombre m est supérieur ou égal à 3 et avantageusement égal à 3 ou 4.

La fonction réactive du composé multifonctionnel représentée par le symbole Z est une fonction capable de former une fonction amide.

De préférence, le composé de formule (I) sont choisis parmi la 2,2,6,6-tétra-(β-carboxyéthyl)-cyclohexanone, l'acide trimésique, la 2,4,6-tri-(acide aminocaproique)-1,3,5-triazine et la 4-aminoéthyle-1,8-octanediamine.

Le mélange de monomères à l'origine des chaînes macromoléculaires étoiles peut comporter d'autres composés, tels que des limiteurs de chaînes, des catalyseurs, des additifs, tels que des stabilisants lumière, des stabilisants thermiques.

Le fil et/ou les fibres de polyamide destinés à jouer le rôle de matrice seront dénommés ci-après "fil- et/ou fibres-matrice".

Avantageusement, le polyamide à structure étoile présente une masse moléculaire en nombre au moins égale à 15 000.

Selon une variante de l'invention, le fil- et/ou les fibres-matrice sont obtenus à partir d'un mélange du polyamide à structure étoile et d'un polyamide linéaire.

Selon une autre variante, l'article précurseur du matériau composite comporte également au moins un fil- et/ou des fibres-matrice en polyamide linéaire.

Selon une caractéristique préférée, ce polyamide linéaire est un polyamide ou copolyamide aliphatique et/ou semicristallin choisi dans le groupe comprenant le PA 4.6, PA 6, PA 6.6, PA 6.9, PA 6.10, PA 6.12, PA 6.36, PA 11, PA 12 ou un polyamide ou copolyamide semi-aromatique semicristallin choisi dans le groupe comprenant les polyphtalamides, et les mélanges de ces polymères et de leurs copolymères.

Il est alors avantageux que le rapport massique en polyamide à structure étoile, dans le fil- et/ou les fibres-matrice, soit compris entre 0,4 et 1, et préférentiellement au moins égal à 0,6.

Le fil- et/ou les fibres-matrice peuvent comprendre également tous les additifs usuels tels que des ignifugeants, des fluidifiants, des stabilisants chaleur et lumière, des cires, des pigments, des nucléants, des antioxydants, des modificateurs de la résistance aux chocs ou analogues et connus de l'homme de l'art.

Selon l'invention, le fil et/ou les fibres de renfort sont choisis parmi les fils et/ou les fibres de carbone, de verre, d'aramides et de polyimides ou le fil et/ou les fibres de renfort sont un fil et/ou des fibres naturels, choisis parmi les fils et/ou les fibres de sisal, de chanvre, de lin. fibres-matrice. Ce matériau composite comprend une matrice polymérique et des fils et/ou des fibres de renfort.

Par fusion partielle, on entend la fusion d'au moins une partie d'au moins un fil et/ou une fibre-matrice.

Cette fusion peut être réalisée par thermoformage à une température plus ou moins égale à la température de fusion de la matrice polymérique et sous pression. Cette fusion permet d'obtenir une imprégnation homogène des fils et/ou des fibres de renfort par la matrice.

Selon une caractéristique préférentielle, le matériau composite ainsi obtenu, présente un taux de renfort massique compris entre 25 et 80 %.

Encore un autre objet de l'invention est un produit semi-fini obtenu par un procédé de thermoformage ou de calandrage de l'article précité, au cours duquel on fond au moins partiellement le fil- et/ou les fibres-matrice afin d'imprégner le fil et/ou les fibres de renfort.

Avantageusement encore, ce produit semi-fini se présente sous forme de plaques ou de rubans.

Le produit semi-fini consiste en un produit intermédiaire, dans lequel les fils et/ou les fibres de renfort ont été imprégnés par la matrice polymérique qui se trouve sous la forme d'une phase continue. Ce produit n'est pas encore sous sa forme définitive.

Le produit semi-fini doit subir une ultime étape de mise en forme, par un procédé de formage ou thermoformage connus de l'homme de l'art, à des températures supérieures à leur point de transition vitreuse et inférieures à leur point de fusion, permettant d'obtenir un produit fini.

Encore un autre objet de l'invention est un produit fini obtenu par un procédé de thermoformage à la forme définitive de l'article précité, au cours duquel on fond au moins partiellement le fil- ou/et les fibres-matrice afin d'imprégner le fil et/ou les fibres de renfort.

De façon générale, les procédés de thermoformage utilisés mettent en oeuvre des basses pressions (inférieures à 20 bars), des températures inférieures à 270°C, et des temps courts (inférieurs à 5 minutes).

D'autres détails et avantages de l'invention apparaîtront plus clairement à la lumière des exemples donnés ci-dessous, uniquement à titre indicatif et à fin d'illustration.

Matrice utilisée : polyamide 6 étoile, obtenu par copolymérisation à partir de caprolactame en présence 0,5% en moles de 2,2,6,6-tétra(β-carboxyéthyl)cyclohexanone, selon un procédé décrit dans le document FR 2743077, comprenant environ 80% de chaînes macromoléculaires étoiles et 20% de chaînes macromoléculaires linéaires, d'indice de fluidité en phase fondue mesuré à 275°C sous 100 g de 55 g/10 minute.

### Exemple 1- Plaque semi-finie réalisée à partir de Polyamide 6 Etoile et de fils de renfort

Une série d'essais à été réalisée à partir d'un fil multifilaments de polyamide 6 Etoile, présentant un titre par brin compris entre 3 et 8 dTex et une ténacité voisine de 15-20 cN/Tex. Un tel multifilament est assemblé, lors d'une opération de tissage multiaxial, avec un fil de renfort continu de carbone hautes performances, comprenant 12.000 filaments, ou avec un fil de renfort de verre, présentant un titre de 600 Tex. Afin de valider la haute fluidité de la matrice à l'état fondu, des tissus multiaxiaux sont réalisés à partir de couches élémentaires, définies comme suit:

### Couche élémentaire

Pli n°1 : fil de renfort - orientation : - 45°
Pli n°2 : fil de renfort - orientation : +45°
Pli n°3 : fil Polyamide 6 Etoile (matrice) - orientation : 90°

Un composite stratifié est ensuite réalisé en plaçant plusieurs couches élémentaires (entre 2 et 10) du tissu obtenu dans un moule présentant une forme de plaque, sous une presse à plateaux chauffants, pendant une durée de 1 à 3 minutes, sous une pression comprise entre 1 et 20 Bars et une température supérieure à la température de fusion du Polyamide 6 étoile (230-260°C). Après refroidissement jusqu'à une température de 50-60°C, le composite est démoulé. Le taux massique de renfort est alors compris entre 60-70%.

La haute fluidité du polymère étoile permet d'obtenir une bonne imprégnation du renfort par la matrice sans engendrer ni les pertes de propriétés mécaniques, ni les problèmes de résistance à la fatigue constatés avec des polymères à bas poids moléculaire. Les propriétés mécaniques en flexion sont comparées à celles d'un composite thermodurcissable obtenu à partir du même matériau de renfort et d'une résine époxy dans les tableaux n°1.1 et 1.2.

**Tableau 1.1 : composites fibres de Carbone**

| **Fibres de carbone** | **Contrainte de rupture (MPa)** | **Module de flexion (MPa)** | **Allongement à la rupture (%)** |
|---|---|---|---|
| **Matrice Epoxy** | **796,0** | **52000** | **1,72** |
| **Matrice PA6 étoile** | **536,0** | **54350** | **1,05** |

**Tableau 1.2 : composites fibres de Verre**

| **Fibres de verre** | **Contrainte de rupture (MPa)** | **Module de flexion (MPa)** | **Allongement à la rupture (%)** |
|---|---|---|---|
| **Matrice Epoxy** | **630,0** | **21000** | **3,53** |
| **Matrice PA6 étoile** | **580,7** | **21160** | **3,26** |

L'utilisation d'un renfort sous forme de fil continu permet de conserver des propriétés mécaniques élevées dans la direction des nappes unidirectionnelles de renfort. L'influence de la température sur les propriétés mécaniques en flexion est donnée dans le tableau n°2.

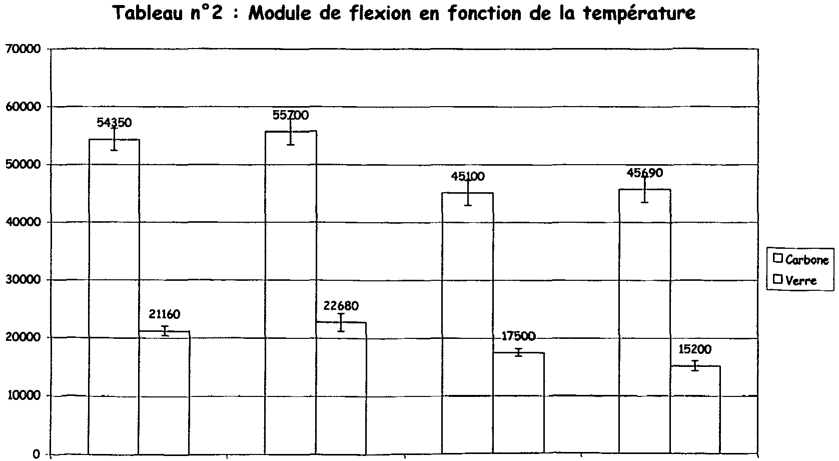

Enfin, le fait d'utiliser la matrice sous la forme d'un fil permet, outre un avantage économique par rapport aux solutions de poudrage ou de pré-imprégnation classiques, une manipulation aisée ainsi qu'une très bonne maîtrise du taux de renforcement du matériau composite final.

Le tableau n°3 donne une synthèse des propriétés mécaniques obtenues.

**Tableau 3: Synthèse des propriétés mécaniques obtenues.**

| | **Unités** | **Norme** | **Tissu Multiaxial PA6 étoile / Carbone** | **Tissu Multiaxial PA6 étoile / Verre** |
|---|---|---|---|---|
| Taux d'imprégnation (p/p) | % | | 59 | 65 |
| Densité | | | 1.4 | 1.8 |

| ***Traction Simple*** | | | | |
|---|---|---|---|---|
| Contrainte rupture | MPa | ISO 527 | 1090 | 545 |
| Module d'Young | GPa | ISO 527 | 64 | 21.3 |
| Allongement | % | ISO 527 | 1.7 | 2.76 |

| ***Flexion 3 points*** | | | | |
|---|---|---|---|---|
| Contrainte rupture | MPa | ISO 14125 | 536 | 580 |
| Module de flexion | GPa | ISO 14125 | 54.3 | 21.1 |

| ***Compression*** | | | | |
|---|---|---|---|---|
| Contrainte de rupture | MPa | ISO 604 | 210 | 195 |

### Exemple 2 - Tresses composites

Afin de confirmer l'intérêt de l'invention pour les composites à section circulaire, des tresses ont été réalisées à partir de différents fils de polyamide 6 étoile et des matériaux de renfort choisis parmi ceux connus de l'homme de l'art, tels que des fils de carbone ou de verre.

A cette fin, un mélange a été effectué lors du tressage, en intercalant sur la tresseuse, les fils de renfort et les fils de polyamide. La tresse ainsi obtenue est ensuite placée dans un moule creux, le maintien de la tresse étant assuré par une vessie interne, gonflée après fermeture du moule. Une imprégnation optimale est ainsi obtenue, grâce à la haute fluidité du polyamide étoile à l'état fondu, malgré des faibles pressions de mise en oeuvre [1-5 Bars]. Les températures mises en oeuvre étant comprises entre 230°C et 260°C, le temps d'imprégnation est inférieur à 30 secondes. Le composite est ensuite démoulé après avoir été refroidi au-dessous du point de cristallisation de la matrice, il présente alors un taux de renfort massique pouvant varier de 65 à 75%. L'état de surface de la pièce est amélioré grâce à la fluidité du polymère.

## Revendications

1. Article précurseur d'un matériau composite comprenant une matrice polymérique et au moins un fil et/ou fibres de renfort, ledit article comprenant au moins un fil et/ou des fibres de renfort et au moins un fil et/ou des fibres de matrice polymérique **caractérisé en ce que** :
- ledit fil et/ou lesdites fibres de renfort sont choisis parmi les fils et/ou les fibres de carbone, de verre, d'aramides et de polyimides ou sont un fil et/ou des fibres naturelles, choisis parmi les fils et/ou les fibres de sisal, de chanvre, de lin,
- ledit fil et/ou lesdites fibres de matrice polymérique sont en polyamide thermoplastique, et **en ce que**,
- ledit polyamide thermoplastique dudit fil et/ou desdites fibres de matrice polymérique comprend au moins un polyamide à structure étoile comportant :
◆ des chaînes macromoléculaires étoiles comprenant un ou plusieurs coeurs et au moins trois branches ou trois segments polyamides liés à un coeur,
◆ le cas échéant des chaînes macromoléculaires polyamides linéaires,

2. Article composé selon la revendication 1, **caractérisé en ce que** le rapport en poids entre les chaînes macromoléculaires étoiles et la somme des chaînes macromoléculaires étoiles et des chaînes linéaires dans le polyamide à structure étoile, est compris entre 0,1 et 1.

3. Article composé selon l'une des revendications précédentes, **caractérisé en ce que** ledit polyamide à structure étoile est obtenu par copolymérisation d'un mélange de monomères comprenant au moins :
a) des monomères de formule générale (I) suivante : 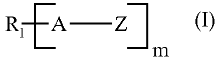
b) des monomères de formules générales (IIa) et (IIb) suivantes :
X-R₂-Y (IIa)
ou 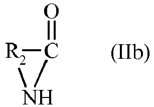
c) éventuellement des monomères de formule générale (III) suivante :
Z-R₃-Z (III)
dans lesquelles :
- R₁ est un radical hydrocarboné comprenant au moins 2 atomes de carbone, linéaire ou cyclique, aromatique ou aliphatique et pouvant comprendre des hétéroatomes,
- A est une liaison covalente ou un radical hydrocarboné aliphatique pouvant comprendre des hétéroatomes et comprenant de 1 à 20 atomes de carbone,
- Z représente une fonction amine primaire ou une fonction acide carboxylique,
- Y est une fonction amine primaire quand X représente une fonction acide carboxylique
ou
- Y est une fonction acide carboxylique quand X représente une fonction amine primaire,
- R2, R3 identiques ou différents représentent des radicaux hydrocarbonés aliphatiques, cycloaliphatiques ou aromatiques substitués ou non comprenant de 2 à 20 atomes de carbone et pouvant comprendre des hétéroatomes,
- m représente un nombre entier compris entre 3 et 8.

4. Article composé selon l'une des revendications 1 ou 2, **caractérisé en ce que** ledit polyamide à structure étoile est obtenu par extrusion d'un polyamide du type de ceux obtenus par polymérisation des lactames et/ou amino-acides avec le composé de formule (I).

5. Article selon l'une des revendications 3 à 4, **caractérisé en ce que** A représente un radical méthylène, polyméthylénique ou polyoxyalkylénique.

6. Article selon l'une des revendications 3 à 5, **caractérisé en ce que** le composé de formule (I) est choisi parmi la 2,2,6,6-tétra-(β-carboxyéthyl)-cyclohexanone, l'acide trimésique, la 2,4,6-tri-(acide aminocaproique)-1,3,5-triazine, la 4-aminoéthyle-1,8-octanediamine.

7. Article selon l'une des revendications précédentes, **caractérisé en ce que** le polyamide à structure étoile présente une masse moléculaire en nombre au moins égale à 15 000.

8. Article selon l'une des revendications précédentes, **caractérisé en ce que** le fil- et/ou les fibres-matrice sont obtenus à partir d'un mélange du polyamide à structure étoile et d'un polyamide linéaire.

9. Article selon l'une des revendications précédentes, **caractérisé en ce qu'**il comporte également au moins un fil- et/ou des fibres-matrice en polyamide linéaire.

10. Article selon l'une des revendications 8 ou 9, **caractérisé en ce que** le polyamide linéaire est un polyamide ou copolyamide aliphatique et/ou semicristallin choisi dans le groupe comprenant le PA 4.6, PA 6,PA 6.6, PA 6.9, PA 6.10, PA 6.12, PA 6.36, PA 11, PA 12 ou un polyamide ou copolyamide semi-aromatique semicristallin choisi dans le groupe comprenant les polyphtalamides, et les mélanges de ces polymères et de leurs copolymères.

11. Article selon l'une des revendications précédentes, **caractérisé en ce que** le rapport massique en polyamide à structure étoile, dans le fil- et/ou les fibres-matrice, est préférentiellement compris entre 0,4 et 1.

12. Article selon la revendication précédente, **caractérisé en ce que** le rapport massique est au moins égal à 0,6.

13. Article selon l'une des revendications précédentes, **caractérisé en ce que** le fil- et/ou les fibres-matrice comprennent également des additifs, tels que des ignifugeants, des fluidifiants, des stabilisants chaleur et lumière, des cires, des pigments, des nucléants, des antioxydants, des modificateurs de la résistance aux chocs ou analogues.

14. Article selon l'une des revendications précédentes, **caractérisé en ce qu'**il comporte également un matériau en poudre précurseur de matrice.

15. Article selon la revendication précédente, **caractérisé en ce que** ledit matériau en poudre précurseur de matrice est un polyamide.

16. Article selon l'une des revendications précédentes, **caractérisé en ce qu'**il est sous forme de fils continus ou coupés, de rubans, de mats, de tressés, de tissus, de tricots, de nappes, de multiaxiaux, de non-tissés et/ou de formes complexes comprenant plusieurs des formes précitées.

## Patentansprüche

1. Vorläufergegenstand für einem Verbundmaterial, umfassend eine Polymermatrix und mindestens einen Verstärkungsfaden und/oder Verstärkungsfasern, wobei der Gegenstand mindestens einen Verstärkungsfaden und/oder Verstärkungsfasern und mindestens einen Polymermatrixfaden und/oder Polymermatrixfasern umfasst, **dadurch gekennzeichnet, dass**:
- der Verstärkungsfaden und/oder die Verstärkungsfasern aus Kohlenstoff-, Glas-, Aramid- oder Polyimidfäden und/oder -fasern ausgewählt ist/sind oder ein natürlicher Faden und/oder natürliche Fasern, ausgewählt aus Sisal-, Hanf-, Flachsfäden und/oder -fasern, ist/sind,
- der Polymermatrixfaden und/oder die Polymermatrixfasern aus thermoplastischem Polyamid sind, und dadurch, dass
- das thermoplastische Polyamid des Polymermatrixfadens und/oder der Polymermatrixfasern mindestens ein Polyamid mit Sternstruktur umfasst, das Folgendes enthält:
◆ makromolekulare sternförmige Ketten, die einen oder mehrere Kerne und mindestens drei Polyamidverzweigungen oder drei Polyamidsegmente, die an einen Kern gebunden sind, umfassen,
◆ gegebenenfalls makromolekulare gerade Polyamidketten.

2. Verbundgegenstand nach Anspruch 1, **dadurch gekennzeichnet, dass** das Gewichtsverhältnis zwischen den makromolekularen sternförmigen Ketten und der Summe der makromolekularen sternförmigen Ketten und der geraden Ketten in dem Polyamid mit Sternstruktur zwischen 0,1 und 1 beträgt.

3. Verbundgegenstand nach einem der vorhergehenden Ansprüche, **dadurch gekennzeichnet, dass** das Polyamid mit Sternstruktur durch Copolymerisation eines Gemischs von Monomeren erhalten wird, das mindestens Folgendes umfasst:
a) Monomere der folgenden allgemeinen Formel (I): 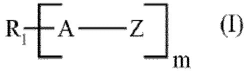
b) Monomere der folgenden allgemeinen Formeln (IIa) und (IIb):
X-R₂-Y (IIa)
oder 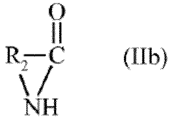
c) gegebenenfalls Monomere der folgenden allgemeinen Formel (III):
Z-R₃-Z (III),
in denen:
- R1 ein gerader oder cyclischer, aromatischer oder aliphatischer Kohlenwasserstoffrest ist, der mindestens 2 Kohlenstoffatome umfasst und Heteroatome umfassen kann,
- A eine kovalente Bindung oder ein aliphatischer Kohlenwasserstoffrest ist, der Heteroatome umfassen kann und 1 bis 20 Kohlenstoffatome umfasst,
- Z für eine primäre Aminfunktion oder eine Carbonsäurefunktion steht,
- Y eine primäre Aminfunktion ist, wenn X für eine Carbonsäurefunktion steht,
oder
- Y eine Carbonsäurefunktion ist, wenn X für eine primäre Aminfunktion steht,
- R2, R3, die gleich oder verschieden sind, für aliphatische, cycloaliphatische oder aromatische, substituierte oder unsubstituierte Kohlenwasserstoffreste stehen, die 2 bis 20 Kohlenstoffatome umfassen und Heteroatome umfassen können,
- m für eine ganze Zahl zwischen 3 und 8 steht.

4. Verbundgegenstand nach einem der Ansprüche 1 oder 2, **dadurch gekennzeichnet, dass** das Polyamid mit Sternstruktur durch Extrusion eines Polyamids des Typs derjenigen, die durch Polymerisation von Lactamen und/oder Aminosäuren mit der Verbindung der Formel (I) erhalten werden, erhalten wird.

5. Gegenstand nach einem der Ansprüche 3 bis 4, **dadurch gekennzeichnet, dass** A für einen Methylen-, Polymethylen oder Polyoxyalkylenrest steht.

6. Gegenstand nach einem der Ansprüche 3 bis 5, **dadurch gekennzeichnet, dass** die Verbindung der Formel (I) aus 2,2,6,6-Tetra-(β-carboxyethyl)-cyclohexanon, Trimesinsäure, 2,4,6-Tri-(aminocapronsäure)-1,3,5-triazin, 4-Aminoethyl-1,8-octandiamin ausgewählt ist.

7. Gegenstand nach einem der vorhergehenden Ansprüche, **dadurch gekennzeichnet, dass** das Polyamid mit Sternstruktur eine zahlenmittlere Molekülmasse von mindestens gleich 15000 aufweist.

8. Gegenstand nach einem der vorhergehenden Ansprüche, **dadurch gekennzeichnet, dass** der Matrixfaden und/oder die Matrixfasern ausgehend von einem Gemisch aus dem Polyamid mit Sternstruktur und einem geraden Polyamid erhalten werden.

9. Gegenstand nach einem der vorhergehenden Ansprüche, **dadurch gekennzeichnet, dass** er auch mindestens einen Matrixfaden und/oder Matrixfasern aus geradem Polyamid umfasst.

10. Gegenstand nach einem der Ansprüche 8 oder 9, **dadurch gekennzeichnet, dass** das gerade Polyamid ein aliphatisches und/oder semikristallines Polyamid oder Copolyamid, ausgewählt aus der PA 4.6, PA 6, PA 6.6, PA 6.9, PA 6.10, PA 6.12, PA 6.36, PA 11, PA 12 umfassenden Gruppe, oder ein semiaromatisches semikristallines Polyamid oder Copolyamid, ausgewählt aus der Polyphthalamide umfassenden Gruppe, und die Gemische dieser Polymere und ihrer Copolymere ist.

11. Gegenstand nach einem der vorhergehenden Ansprüche, **dadurch gekennzeichnet, dass** das Massenverhältnis an Polyamid mit Sternstruktur in dem Matrixfaden und/oder den Matrixfasern vorzugsweise zwischen 0,4 und 1 beträgt.

12. Gegenstand nach dem vorhergehenden Anspruch, **dadurch gekennzeichnet, dass** das Massenverhältnis mindestens gleich 0,6 ist.

13. Gegenstand nach einem der vorhergehenden Ansprüche, **dadurch gekennzeichnet, dass** der Matrixfaden und/oder die Matrixfasern auch Additive umfassen, wie Flammschutzmittel, Verdünner, Wärme- und Lichtstabilisatoren, Wachse, Pigmente, Keimbildner, Antioxidantien, Schlagzähigkeitsmodifikatoren oder dergleichen.

14. Gegenstand nach einem der vorhergehenden Ansprüche, **dadurch gekennzeichnet, dass** er auch ein pulverförmiges Matrixvorläufermaterial umfasst.

15. Gegenstand nach dem vorhergehenden Anspruch, **dadurch gekennzeichnet, dass** das pulverförmige Matrixvorläufermaterial ein Polyamid ist.

16. Gegenstand nach einem der vorhergehenden Ansprüche, **dadurch gekennzeichnet, dass** er in Form von kontinuierlichen oder geschnittenen Fäden, Bändern, Matten, Geflechten, Geweben, Gewirken, Tüchern, multiaxialen Strukturen, Vliesen und/oder komplexen Formen, die mehrere der vorstehend genannten Formen umfassen, vorliegt.

## Claims

1. Precursor article of a composite material comprising a polymeric matrix and at least one reinforcing yarn and/or reinforcing fibers, said article comprising at least one reinforcing yarn and/or reinforcing fibers and at least one polymeric matrix yarn and/or polymeric matrix fibers, **characterized in that**:
- said reinforcing yarn and/or said reinforcing fibers are chosen from carbon, glass, aramid and polyimide yarns and/or fibers or are a natural yarn and/or natural fibers chosen from sisal, hemp or flax yarns and/or fibers,
- said polymeric matrix yarn and/or said polymeric matrix fibers are made of thermoplastic polyamide, and **in that**
- said thermoplastic polyamide of said polymeric matrix yarn and/or of said polymeric matrix fibers comprises at least one polyamide possessing a star structure comprising:
◆ star macromolecular chains comprising one or more cores and at least three polyamide branches or three polyamide segments bonded to a core,
◆ the case being, linear polyamide macromolecular chains.

2. Composed article according to Claim 1, **characterized in that** the ratio by weight of the star macromolecular chains to the sum of the star macromolecular chains and linear chains in the polyamide possessing a star structure is between 0.1 and 1.

3. Composed article according to either of the preceding claims, **characterized in that** said polyamide possessing a star structure is obtained by copolymerization of a mixture of monomers comprising at least:
a) monomers of following general formula (I): 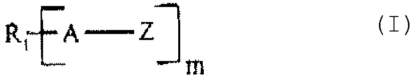
b) monomers of following general formulae (IIa) and (IIb):
X-R₂-Y (IIa)
or 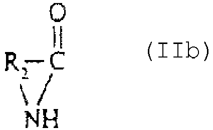
c) optionally monomers of following general formula (III):
Z-R₃-Z (III)
in which:
- R₁ is an aliphatic or aromatic, cyclic or linear, hydrocarbon radical comprising at least 2 carbon atoms which can comprise heteroatoms,
- A is a covalent bond or an aliphatic hydrocarbon radical which can comprise heteroatoms and which comprises from 1 to 20 carbon atoms,
- Z represents a primary amine functional group or a carboxylic acid functional group,
- Y is a primary amine functional group when X represents a carboxylic acid functional group
or
- Y is a carboxylic acid functional group when X represents a primary amine functional group,
- R₂ and R₃, which are identical or different, represent substituted or unsubstituted, aromatic, cycloaliphatic or aliphatic hydrocarbon radicals comprising from 2 to 20 carbon atoms which can comprise heteroatoms,
- m represents an integer between 3 and 8.

4. Composed article according to either of Claims 1 and 2, **characterized in that** said polyamide possessing a star structure is obtained by extrusion of a polyamide of the type of those obtained by polymerization of lactams and/or amino acids with the compound of formula (I).

5. Article according to either of Claims 3 and 4, **characterized in that** A represents a methylene, polymethylene or polyoxyalkylene radical.

6. Article according to one of Claims 3 to 5, **characterized in that** the compound of formula (I) is chosen from 2,2,6,6-tetra(β-carboxyethyl)cyclohexanone, trimesic acid, 2,4,6-tri(aminocaproic acid)-1,3,5-triazine and 4-aminoethyl-1,8-octanediamine.

7. Article according to one of the preceding claims, **characterized in that** the polyamide possessing a star structure exhibits a number-average molecular mass at least equal to 15 000.

8. Article according to one of the preceding claims, **characterized in that** the matrix yarn and/or matrix fibers are obtained from a blend of the polyamide possessing a star structure and of a linear polyamide.

9. Article according to one of the preceding claims, **characterized in that** it also comprises at least one matrix yarn and/or matrix fibers made of linear polyamide.

10. Article according to either of Claims 8 and 9, **characterized in that** the linear polyamide is an aliphatic and/or semicrystalline polyamide or copolyamide chosen from the group consisting of PA-4,6, PA-6, PA-6,6, PA-6,9, PA-6,10, PA-6,12, PA-6,36, PA-11 and PA-12, or a semicrystalline semiaromatic polyamide or copolyamide chosen from the group consisting of polyphthalamides, and the blends of these polymers and of their copolymers.

11. Article according to one of the preceding claims, **characterized in that** the ratio by weight of polyamide possessing a star structure in the matrix yarn and/or matrix fibers is preferably between 0.4 and 1.

12. Article according to the preceding claim, **characterized in that** the ratio by weight is at least equal to 0.6.

13. Article according to one of the preceding claims, **characterized in that** the matrix yarn and/or matrix fibers also comprise additives, such as flame-retardants, plasticizers, heat and light stabilizers, waxes, pigments, nucleating agents, antioxidants, impact-strength modifiers or analogous compounds.

14. Article according to one of the preceding claims, **characterized in that** it also comprises a powdered material which is the matrix precursor.

15. Article according to the preceding claim, **characterized in that** said powdered material which is the matrix precursor is a polyamide.

16. Article according to one of the preceding claims, **characterized in that** it is in the form of continuous or cut yarns, tapes, mats, braids, woven fabrics, knitted fabrics, sheets, multiaxials, nonwovens and/or complex forms comprising several of the abovementioned forms.
